# EUROPÄISCHE PATENTSCHRIFT

(11) **EP 1 873 003 B1**
(45) Veröffentlichungstag und Bekanntmachung des Hinweises auf die Patenterteilung: **08.09.2010**
(21) Anmeldenummer: 07012321.1
(22) Anmeldetag: 23.06.2007
(51) Int. Cl.: B60N 2/14

(54) **Sitzanordnung für ein Kraftfahrzeug mit einem Drehsitz**
Seating arrangement for a motor vehicle with a pivotable seat
Installation de siège pour un véhicule automobile doté d'un siège pivotant

(30) Priorität: 01.07.2006 DE 102006030510
(43) Veröffentlichungstag der Anmeldung: 02.01.2008
(73) Patentinhaber: GM Global Technology Operations, Inc., Detroit, MI 48265-3000 (US)
(72) Erfinder: Maier, Jürgen, 67808 Weitersweiler (DE); Völz, Reimer, 65428 Rüsselsheim (DE)
(74) Vertreter: Daniel, Ulrich W.P.

(56) Entgegenhaltungen:
- EP-A- 0 358 285
- DE-A1-102004 014 421
- JP-A- 2000 326 772
- JP-A- 2005 289 246

## Beschreibung

Die vorliegende Erfindung betrifft eine Sitzanordnung für ein Kraftfahrzeug mit einem Drehsitz und einer dem Drehsitz zugeordneten Einstiegsöffnung, wobei der Drehsitz um eine Hochachse verschwenkt werden kann.

Aus dem Stand der Technik sind unterschiedliche Sitzanordnungen bekannt, die dem Fahrzeuginsassen das Ein- oder Aussteigen in das oder aus dem Kraftfahrzeug erleichtern sollen. So haben sich insbesondere so genannte Drehsitze durchgesetzt, die um eine Hochachse verschwenkt werden können, um den Drehsitz in Richtung einer Ein- oder Ausstiegsöffnung zu drehen.

Ein Drehsitz dieser Art ist in der DE 203 18 391 U1 beschrieben. Der bekannte Drehsitz umfasst ein Sitzteil und eine Rückenlehne, wobei das Sitzteil über einen Zwischenrahmen an einem Bodenrahmen befestigt ist. Der Zwischenrahmen setzt sich wiederum aus einem Lagerrahmenteil, das an dem Bodenrahmen befestigt ist und eine senkrechte Lagerbohrung aufweist, und einem Schwenkrahmenteil zusammen, das an dem Sitzteil befestigt ist und einen Schwenkzapfen umfasst, der sich in die Lagerbohrung in dem Lagerrahmenteil erstreckt. Schwenkzapfen und Lagerbohrung bilden somit eine vertikale Schwenkachse aus, um die das Schwenkrahmenteil und somit das Sitzteil relativ zu dem Lagerrahmenteil verschwenkt werden kann. Ferner kann das Sitzteil mit Hilfe des Bodenrahmens bezogen auf die Fahrtrichtung nach vorne oder hinten geneigt werden. Da die Übertragung der Neigung von dem Bodenrahmen auf das Sitzteil über den Zwischenrahmen erfolgt, kann es vorkommen, dass die Schwenkachse ebenfalls nach vorne oder hinten geneigt ist. Die aus der DE 203 18 391 U bekannte Lösung hat sich bewährt, ist jedoch mit dem Nachteil behaftet, dass das Ein- oder Ausschwenken des Drehsitzes in die entsprechende Position erschwert ist. So sind häufig teure und aufwendige vollelektrische oder halbelektrische Antriebe notwendig, um die entsprechende Schwenkbewegung des Drehsitzes zu erzielen.

Die JP 2000326772 A offenbart ebenfalls eine Sitzanordnung mit einem Drehsitz und einer dem Drehsitz zugeordneten Einstiegsöffnung, wobei der Drehsitz um eine Hochachse verschwenkt werden kann. Um das Ein- und Aussteigen zu vereinfachen, wird eine Hochachse vorgeschlagen, die sowohl nach hinten als auch zu derjenigen Seite des Drehsitzes geneigt ist, die der Einstiegsöffnung zugewandt ist. Darüber hinaus sind auch aus der JP 2005289246 A und der EP 0 358 285 A2 Drehsitze bekannt, deren Hochachse zu der der Einstiegsöffnung zugewandten Seite der Drehsitze geneigt sind.

Diese Drehsitze müssen relativ hoch angeordnet sein, um eine Kollision mit einer Schwelle der Einstiegsöffnung zu vermeiden, wodurch zusätzliche konstruktive Maßnahmen erforderlich werden.

Es ist daher eine Aufgabe der vorliegenden Erfindung, eine Sitzanordnung für ein Kraftfahrzeug mit einem Drehsitz zu schaffen, bei der einerseits die Einschwenkbewegung des Drehsitzes erleichtert und andererseits ein kollisionsfreies Verschwenken des Drehsitzes sichergestellt ist.

Diese Aufgabe wird durch die in Patentanspruch 1 angegebenen Merkmale gelöst. Vorteilhafte Ausführungsformen der Erfindung sind Gegenstand der Unteransprüche.

Die erfindungsgemäße Sitzanordnung für ein Kraftfahrzeug umfasst einen Drehsitz und eine dem Drehsitz zugeordnete Einstiegsöffnung. So kann es sich bei dem Drehsitz beispielsweise um den Fahrersitz handeln, wobei die zugeordnete Einstiegsöffnung von der Öffnung gebildet ist, die von der Fahrertür verschlossen ist. An Stelle der Bezeichnung Einstiegsöffnung kann auch die Bezeichnung Ausstiegsöffnung gewählt werden. Der Drehsitz kann um eine Hochachse verschwenkt werden. Erfindungsgemäß ist die Hochachse gegenüber einer Vertikalen zu der Seite des Drehsitzes geneigt, die der Einstiegsöffnung abgewandt ist.

Die Erfindung hat zunächst den Vorteil, dass durch die erfindungsgemäß geneigte Hochachse eine automatische Einschwenkbewegung des Drehsitzes allein aufgrund des Eigengewichts des Fahrzeuginsassen ausgelöst wird. Auf einen teuren und aufwendigen vollelektrischen oder halbelektrischen Antrieb kann grundsätzlich verzichtet werden. Da die Hochachse zu der Seite des Drehsitzes geneigt ist, die der Einstiegsöffnung abgewandt ist, ist die Einschwenkbewegung unterstützt. Die Neigung der Hochachse zu der der Einstiegsöffnung abgewandten Seite ist insofern von Vorteil, als dass beim manuellen Einschwenken des Drehsitzes die größten Probleme auftreten. Ein weiterer Vorteil einer zu der der Einstiegsöffnung abgewandten Seite geneigten Hochachse besteht darin, dass der ausgeschwenkte Drehsitz aufgrund der geneigten Hochachse schräg nach oben gestellt ist und somit über die Schwelle im Bereich der Einstiegsöffnung geschwenkt ist. Somit kann ein besonders kompakter Aufbau des Drehsitzes erzielt werden, selbst wenn eine besonders hohe Schwelle zu überwinden ist.

In einer bevorzugten Ausführungsform der erfindungsgemäßen Sitzanordnung ist die Hochachse außermittig in Richtung der Einstiegsöffnung versetzt angeordnet. So kann die Hochachse beispielsweise entlang der Sitzaußenseite in der Nähe der Einstiegsöffnung angeordnet sein.

In einer besonders bevorzugten Ausführungsform der erfindungsgemäßen Sitzanordnung ist die Hochachse mit einem Neigungswinkel zwischen 1° und 5° gegenüber der Vertikalen geneigt. In diesem Bereich wird einerseits ein sicheres und andererseits ein ruckfreies automatisches Einschwenken aufgrund des Eigengewichts des Fahrzeuginsassen erreicht, wodurch der Komfort erhöht und die Handhabung erleichtert ist.

In einer vorteilhaften Ausführungsform der erfindungsgemäßen Sitzanordnung ist der Drehsitz ausschließlich manuell verschwenkbar. Dies bedeutet, dass keinerlei zusätzlichen Antriebe, wie beispielsweise Elektromotoren o. ä., zum Verschwenken des Drehsitzes verwendet werden bzw. vorgesehen sind.

In einer weiteren vorteilhaften Ausführungsform der erfindungsgemäßen Sitzanordnung kann der Drehsitz von einer Fahrposition, in der ein Fahrzeuginsasse während der Fahrt auf dem Drehsitz sitzt, in eine Einstiegsposition verschwenkt werden, in der das Platznehmen auf dem Drehsitz von außerhalb des Kraftfahrzeugs vereinfacht ist. Die Einstiegsposition kann ebenso als Ausstiegsposition bezeichnet werden.

Um den Ein- bzw. Ausstieg besonders zu vereinfachen, ragt der Drehsitz in einer weiteren vorteilhaften Ausführungsform der erfindungsgemäßen Sitzanordnung in der Einstiegsposition zumindest teilweise in oder durch die Einstiegsöffnung.

In einer besonders vorteilhaften Ausführungsform der erfindungsgemäßen Sitzanordnung weist der Drehsitz ein Sitzteil auf, dessen Neigung verändert werden kann. Als Sitzteil wird dasjenige Teil des Drehsitzes bezeichnet, auf dem der Fahrzeuginsasse Platz nimmt. Bei dieser Ausführungsform ist die Hochachse unabhängig von der Neigung des Sitzteiles stets gegenüber der Vertikalen geneigt. Dies stellt einen weiteren Unterschied gegenüber der aus der DE 203 18 391 U1 offenbarten Sitzanordnung dar. Hier hängt die Neigung der Hochachse nämlich von der Neigung des Sitzteiles ab. Die Neigung der Hochachse bei der Erfindung und somit ein sicheres automatisches Einschwenken ist stets gewährleistet.

In einer weiteren vorteilhaften Ausführungsform der erfindungsgemäßen Sitzanordnung ist die Neigung der Hochachse gegenüber der Vertikalen konstant. Hierdurch ist beispielsweise bei gleich bleibendem Eigengewicht des Fahrzeuginsassen stets dieselbe Einschwenkgeschwindigkeit gewährleistet, an die sich der Fahrzeuginsasse gewöhnt hat.

Gemäß einer weiteren vorteilhaften Ausführungsform der erfindungsgemäßen Sitzanordnung umfasst der Drehsitz ein Sitzteil und eine Rückenlehne.

In einer weiteren vorteilhaften Ausführungsform der erfindungsgemäßen Sitzanordnung erstreckt sich das Sitzteil in der Einstiegsposition des Drehsitzes durch die Einstiegsöffnung, wodurch das Ein oder Aussteigen des Fahrzeuginsassen erheblich vereinfacht ist.

Die Erfindung wird im Folgenden anhand einer beispielhaften Ausführungsform unter Bezugnahme auf die beigefügten Zeichnungen näher erläutert. Es zeigen:
- Fig. 1: eine schematische Vorderansicht einer Ausführungsform der erfindungsgemäßen Sitzanordnung mit dem Drehsitz in der Fahrposition und
- Fig. 2: die Sitzanordnung von Fig. 1 mit dem Drehsitz in der Einstiegsposition.

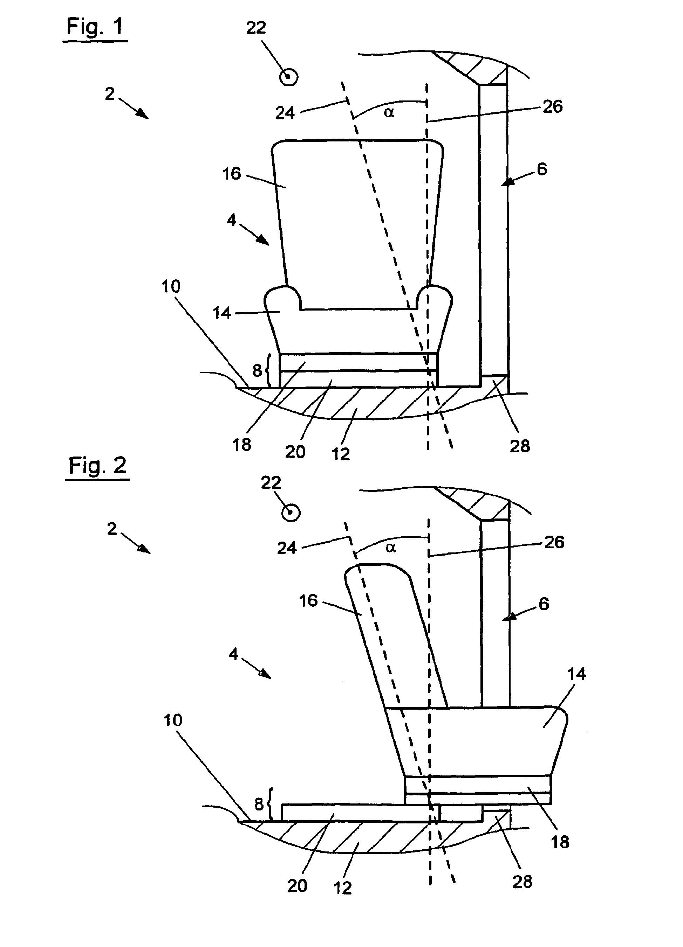

- Fig. 1: zeigt eine Ausführungsform der erfindungs- gemäßen Sitzanordnung 2. Die Sitzanordnung 2 umfasst zunächst ei- nen Drehsitz 4 und eine dem Drehsitz 4 zugeordnete Ein- bzw. Aus- stiegsöffnung 6, die nachstehend einfach als Einstiegsöffnung 6 bezeichnet wird. Der Drehsitz 4 ist über ein Untergestell 8 mit dem Boden 10 des Kraftfahrzeugs 12 verbunden.

Der Drehsitz 4 selbst umfasst ein Sitzteil 14 und eine Rückenlehne 16. Das Untergestell 8 weist einen fest mit dem Sitzteil 14 verbundenen Schwenkrahmen 18 auf. Darüber hinaus umfasst das Untergestell 8 einen an dem Fahrzeugboden 10 angeordneten Bodenrahmen 20, an dem der Schwenkrahmen 18 schwenkbar angeordnet ist. Der Bodenrahmen 20 ist dabei derart ausgebildet, dass der Drehsitz 4 in oder entgegen der Fahrtrichtung 22, die in der Darstellung der Normalen der Zeichnungsebene entspricht, verschoben werden kann. Ferner ist das Schwenkrahmenteil 18 derart ausgebildet, dass die Neigung des Sitzteils 14 verändert werden kann.

Der Drehsitz 4 kann um eine Hochachse 24 verschwenkt werden. Die Hochachse 24 ist gegenüber einer Vertikalen bzw. Senkrechten 26 geneigt, wobei die Hochachse 24 zu der Seite des Drehsitzes 4 geneigt ist, die der Einstiegsöffnung 6 abgewandt ist. Im vorliegenden Beispiel ist diese Hochachse 24 mittels einer entsprechenden Schwenkverbindung zwischen dem Bodenrahmen 20 und dem Schwenkrahmen 18 realisiert, die nicht näher dargestellt ist. Die Hochachse 24 ist dabei - bezogen auf den Drehsitz 4 - außermittig in Richtung der Einstiegsöffnung 6 versetzt angeordnet. Dies kann beispielsweise in der Nähe der B-Säule des Kraftfahrzeugs 12 erfolgen. Zwischen der Hochachse 24 und der Vertikalen 26 ist ein Neigungswinkel α ausgebildet, der vorzugsweise zwischen 1° und 5° beträgt.

Nachstehend werden die Funktionsweise sowie weitere Merkmale der Sitzanordnung 2 unter Bezugnahme auf die Fig. 1 und 2 beschrieben. In Fig. 1 befindet sich der Drehsitz 4 in einer Fahrposition. Bei dem vorliegenden Beispiel ist der Drehsitz 4 als Vordersitz ausgebildet, so dass der Drehsitz 4 in der Fahrposition in Fahrtrichtung 22 weist. Um das Einsteigen des Fahrzeuginsassen (nicht dargestellt) zu vereinfachen, wird der Drehsitz 4 um die geneigte Hochachse 24 in die in Fig. 2 dargestellte Einstiegsposition verschwenkt. Dies geschieht bei der dargestellten Ausführungsform ausschließlich manuell.

In der Einstiegsposition weist der Drehsitz 4 derart zu der Einstiegsöffnung 6, dass sich das Sitzteil 14 des Drehsitzes 4 durch die Einstiegsöffnung 6 erstreckt. Auf diese Weise ist das Platznehmen auf dem Drehsitz von außerhalb des Kraftfahrzeugs 12 erheblich vereinfacht. Dank der Neigung der Hochachse 24 ist ferner das in die Einstiegsöffnung 6 ragende Sitzteil 14 des Drehsitzes 4 angehoben bzw. schräg gestellt (nicht dargestellt), so dass es in der Einstiegsposition problemlos über eine Schwelle 28 der Einstiegsöffnung 6 gehoben ist. Nimmt nunmehr ein Fahrzeuginsasse auf dem Drehsitz 4 Platz, so bedingt das Eigengewicht des Fahrzeuginsassen zusammen mit der Neigung der Hochachse 24 gegenüber der Vertikalen 26 ein automatisches Einschwenken des Drehsitzes 4, so dass dieser selbsttätig in seine in Fig. 1 gezeigte Fahrposition zurückkehrt bzw. -schwenkt.

Wie bereits eingangs erwähnt kann die Neigung des Sitzteiles 14 mit Hilfe einer entsprechenden Ausbildung des Schwenkrahmens 18 verändert werden. Da die Schwenkverbindung zum Verschenken des Drehsitzes 4 jedoch zwischen dem Schwenkrahmen 18 und dem Bodenrahmen 20 vorgesehen ist, ist die Hochachse 24 unabhängig von der Neigung des Sitzteiles 14 stets gegenüber der Vertikalen 26 geneigt. Bei der vorliegenden Ausführungsform ist diese Neigung der Hochachse 24 gegenüber der Vertikalen 26 darüber hinaus konstant.

### Bezugszeichenliste

- 2: Sitzanordnung
- 4: Drehsitz
- 6: Einstiegsöffnung
- 8: Untergestell
- 10: Fahrzeugboden
- 12: Kraftfahrzeug
- 14: Sitzteil
- 16: Rückenlehne
- 18: Schwenkrahmen
- 20: Bodenrahmen
- 22: Fahrtrichtung
- 24: geneigte Hochachse
- 26: Vertikale
- 28: Schwelle

- α: Neigungswinkel

## Patentansprüche

1. Sitzanordnung für ein Kraftfahrzeug (12) mit einem Drehsitz (4) und einer dem Drehsitz (4) zugeordneten Einstiegsöffnung (6), wobei der Drehsitz (4) um eine Hochachse (24) verschwenkbar ist, **dadurch gekennzeichnet, dass** die Hochachse (24) gegenüber einer Vertikalen (26) zu der Seite des Drehsitzes (4) geneigt ist, die der Einstiegsöffnung (6) abgewandt ist.

2. Sitzanordnung nach Anspruch 1, **dadurch gekennzeichnet, dass** die Hochachse (24) außermittig in Richtung der Einstiegsöffnung (6) versetzt angeordnet ist.

3. Sitzanordnung nach einem der Ansprüche 1 oder 2, **dadurch gekennzeichnet, dass** die Hochachse (24) mit einem Neigungswinkel (α) zwischen 1° und 5° gegenüber der Vertikalen (26) geneigt ist.

4. Sitzanordnung nach einem der vorangehenden Ansprüche, **dadurch gekennzeichnet, dass** der Drehsitz (4) ausschließlich manuell verschwenkbar ist.

5. Sitzanordnung nach einem der vorangehenden Ansprüche, **dadurch gekennzeichnet, dass** der Drehsitz (4) von einer Fahrposition, in der ein Fahrzeuginsasse während der Fahrt auf dem Drehsitz (4) sitzt, in eine Einstiegsposition verschwenkbar ist, in der das Platznehmen auf dem Drehsitz (4) von außerhalb des Kraftfahrzeugs (12) vereinfacht ist.

6. Sitzanordnung nach Anspruch 5, **dadurch gekennzeichnet, dass** der Drehsitz (4) in der Einstiegsposition zumindest teilweise in oder durch die Einstiegsöffnung (6) ragt.

7. Sitzanordnung nach einem der vorangehenden Ansprüche, **dadurch gekennzeichnet, dass** der Drehsitz (4) ein Sitzteil (14) aufweist, dessen Neigung veränderbar ist, wobei die Hochachse (24) unabhängig von der Neigung des Sitzteiles (14) stets gegenüber der Vertikalen (26) geneigt ist.

8. Sitzanordnung nach Anspruch 7, **dadurch gekennzeichnet, dass** die Neigung der Hochachse (24) gegenüber der Vertikalen (26) konstant ist.

9. Sitzanordnung nach einem der vorangehenden Ansprüche, **dadurch gekennzeichnet, dass** der Drehsitz (4) ein Sitzteil (14) und eine Rückenlehne (16) umfasst.

10. Sitzanordnung nach Anspruch 9, **dadurch gekennzeichnet, dass** sich das Sitzteil (14) in der Einstiegsposition durch die Einstiegsöffnung (6) erstreckt.

## Claims

1. A seat arrangement for a motor vehicle (12), comprising a swivel seat (4) and an entrance opening (6) associated with the swivel seat (4), with the swivel seat (4) being rotatable about a vertical axis (24), **characterized in that** the vertical axis (24) is inclined in relation to a vertical (26) towards the side of the swivel seat which faces away from the entrance opening (6).

2. A seat arrangement according to claim 1, **characterized in that** the vertical axis (24) is arranged in an offset off-center manner in the direction of the entrance opening (6).

3. A seat arrangement according to one of the claims 1 or 2, **characterized in that** the vertical axis (24) is inclined in relation to the vertical (26) with an angle of inclination (α) of between 1° and 5°.

4. A seat arrangement according to one of the preceding claims, **characterized in that** the swivel seat (4) can only be swiveled manually.

5. A seat arrangement according to one of the preceding claims, **characterized in that** the swivel seat (4) can be swiveled from a driving position in which a passenger sits during travel on the swivel seat (4) to an entrance position in which sitting down on the swivel seat (4) from outside of the vehicle (12) is simplified.

6. A seat arrangement according to claim 5, **characterized in that** the swivel seat (4) protrudes at least partly into or through the entrance opening (6) in the entrance position.

7. A seat arrangement according to one of the preceding claims, **characterized in that** the swivel seat (4) has a seat part (14) whose inclination can be changed, with the vertical axis (24) always being inclined in relation to the vertical (26) irrespective of the inclination of the seat part (14).

8. A seat arrangement according to claim 7, **characterized in that** the inclination of the vertical axis (24) in relation to the vertical (26) is constant.

9. A seat arrangement according to one of the preceding claims, **characterized in that** the swivel seat (4) comprises a seat part (14) and a backrest (16).

10. A seat arrangement according to claim 9, **characterized in that** the seat part (14) extends through the entrance opening (6) in the entrance position.

## Revendications

1. Disposition de siège pour un véhicule à moteur (12) avec un siège pivotant (4) et une ouverture d'accès (6) associée au siège pivotant (4), lequel siège pivotant (4) peut pivoter autour d'un axe vertical (24), **caractérisée en ce que** l'axe vertical (24) est incliné par rapport à une verticale (26) par rapport au côté du siège pivotant (4) distant de l'ouverture d'accès (6).

2. Disposition de siège selon la revendication 1, **caractérisée en ce que** l'axe vertical (24) est décentré dans la direction de l'ouverture d'accès (6).

3. Disposition de siège selon l'une des revendications 1 ou 2, **caractérisée en ce que** l'axe vertical (24) est incliné selon un angle d'inclinaison (α) compris entre 1° et 5° par rapport à la verticale (26).

4. Disposition de siège selon l'une des revendications précédentes, **caractérisée en ce que** le siège pivotant (4) peut être tourné exclusivement de manière manuelle.

5. Disposition de siège selon l'une des revendications précédentes, **caractérisée en ce que** le siège pivotant (4) peut être tourné d'une position de conduite dans laquelle un occupant du véhicule est assis sur le siège pivotant (4) pendant la marche à une position d'accès dans laquelle l'installation sur le siège pivotant (4) depuis l'extérieur du véhicule à moteur (12) est facilitée.

6. Disposition de siège selon la revendication 5, **caractérisée en ce que** le siège pivotant (4) dépasse au moins partiellement dans ou à travers l'ouverture d'accès (6) dans la position d'accès.

7. Disposition de siège selon l'une des revendications précédentes, **caractérisée en ce que** le siège pivotant (4) présente une partie d'assise (14) dont l'inclinaison est modifiable, l'axe vertical (24) étant toujours incliné par rapport à la verticale (26) quelle que soit l'inclinaison de la partie d'assise (14).

8. Disposition de siège selon la revendication 7, **caractérisée en ce que** l'inclinaison de l'axe vertical (24) par rapport à la verticale (26) est constante.

9. Disposition de siège selon l'une des revendications précédentes, **caractérisée en ce que** le siège pivotant (4) comprend une partie d'assise (14) et un dossier (16).

10. Disposition de siège selon la revendication 9, **caractérisée en ce que** la partie d'assise (14) s'étend à travers l'ouverture d'accès (6) dans la position d'accès.
